(19) Europäisches Patentamt / European Patent Office / Office européen des brevets

(11) **EP 1 419 073 B1**

(12) **EUROPÄISCHE PATENTSCHRIFT**

(45) Veröffentlichungstag und Bekanntmachung des Hinweises auf die Patenterteilung:
**21.10.2009 Patentblatt 2009/43**

(21) Anmeldenummer: **02794568.2**

(22) Anmeldetag: **07.08.2002**

(51) Int Cl.:
**B60T 8/17** (2006.01)

(86) Internationale Anmeldenummer:
**PCT/EP2002/008815**

(87) Internationale Veröffentlichungsnummer:
**WO 2003/013920 (20.02.2003 Gazette 2003/08)**

(54) **VERFAHREN ZUR VERBESSERUNG DES REGELVERHALTENS EINES ANTRIEBSSCHLUPFREGELUNGSSYSTEMS**

METHOD FOR IMPROVING THE REGULATION BEHAVIOUR OF A SLIP CONTROL SYSTEM

PROCEDE POUR AMELIORER LES CARACTERISTIQUES DE REGULATION D'UN SYSTEME D'ANTIPATINAGE

(84) Benannte Vertragsstaaten:
**DE FR IT**

(30) Priorität: **10.08.2001 DE 10138299**
**22.07.2002 DE 10233324**

(43) Veröffentlichungstag der Anmeldung:
**19.05.2004 Patentblatt 2004/21**

(73) Patentinhaber: **Continental Teves AG & Co. oHG 60488 Frankfurt am Main (DE)**

(72) Erfinder:
• **SCHAFIYHA, Schahrad**
**65929 Frankfurt (DE)**
• **RAULFS, Henning**
**61352 Bad Homburg (DE)**

(56) Entgegenhaltungen:
**EP-A- 1 118 517**     **DE-A- 19 638 306**
**US-A- 5 445 442**     **US-A- 5 577 812**

EP 1 419 073 B1

**Beschreibung**

Die Erfindung bezieht sich auf ein Verfahren zur Verbesserung des Regelverhaltens eines Systems zur Antriebsschlupfregelung durch Bremseneingriff, bei dem beim Einsetzen der Antriebsschlupfregelung bzw. bei Eintritt in die Regelung ein als Füllpuls bezeichneter Druckwert oder Solldruck vorgegeben wird.

Diese Art der Antriebsschlupfregelung durch Bremseneingriff kann auch Bestandteil eines Antriebschlupfregelungssystems sein, bei dem je nach Situation entweder die Bremse aktiviert oder in die Motorsteuerung eingegriffen wird.

Bei bekannten Antriebsschlupfregelungssystemen wie z.B. US 5 445 442 oder EP 1 118 517, wird eine vom Regler bestimmte, vorgegebene Schlupfschwelle mittels vorgebbarer Drücke bzw. Bremskräfte an einzelnen Radbremsen und mittels Eingriff in das Motormanagement des Antriebsmotors eingestellt. Die Bremsenregelung erfolgt mittels einer Druckvorgabe, die durch einen Druckregler eingestellt wird. Der Druckregler erfüllt seine Funktion auf Basis einer Regelabweichung zwischen dem angeforderten Solldruck EP (Estimated Pressure) und dem entweder anhand von Drucksensoren gemessenen oder durch Bildung eines Druckmodells näherungsweisen ermittelten Raddruck MP (Model Pressure). Die Regelabweichung zwischen Druck-Sollwert und -Istwert bestimmt die Ansteuerung der Förderpumpe und der entsprechenden Ventile. Eine hohe Druckdynamik (schnelle Änderung des Radbremsdruckes) ist bei einer Vollansteuerung der Hydraulikpumpe gegeben, langsamere Druckänderungen werden durch pulsweises Ansteuern der Pumpe erreicht; dies gilt für Bremsensysteme ohne Hochdruckspeicher, d.h. für Bremsensysteme, bei denen bei Druckbedarf die Druckmittelpumpe zugeschaltet werden muß.

Die Druckvorgabe bei Eintritt in die Bremsenregelung wird mit "Füllpuls" bezeichnet. Diese Bezeichnung geht auf die bekannte Maßnahme bei herkömmlichen Bremsregelungssystemen zurück, zu Beginn eines Bremsvorgangs durch die Ansteuerung der Pumpe und der Ventile Druckmittelvolumen aus einem Speicherreservoir (Hauptzylinder) in die Radbremsen zu verschieben. Der Füllpuls diente zum Anlegen der Bremsbeläge und wurde durch eine empirisch ermittelte Druckvorgabe oder Solldruck gesteuert. Die Druckvorgabe hatte einen konstanten Druckwert und wurde in Abhängigkeit von der Fahrsituationen, vom Raddrehverhalten oder von dem Schlupf initialisiert. Nachdem der Füllpuls beendet war, wurde durch eine Pulsfolge - abhängig vom Raddrehverhalten oder vom Schlupf - der Arbeitspunkt ermittelt.

Bei Bremsanlagen mit einem Hochdruckspeicher zur Druckversorgung des Bremsensystems dient der Füllpuls oder Solldruck als Führungsgröße für die Bemessung des Bremsdruckes in den geregelten Rädern.

Der vorliegenden Erfindung liegt nun die Aufgabe zugrunde, ein Verfahren zur Verbesserung des Regelverhaltens eines Antriebsschlupfregelungssystems zu entwickeln, mit dem sich bereits beim Eintritt in eine Antriebsschlupfregelung ein der jeweiligen Situation angepasster "Füllpuls" oder Solldruck einstellen lässt. Durch einen recht genau dem Bedarf entsprechenden, am Radschlupfverhalten orientierten Füllpuls soll einem Verlust an Traktion frühzeitig entgegen gewirkt werden.

Es hat sich herausgestellt, dass diese Aufgabe durch ein Verfahren der eingangs genannten Art gelöst werden kann, dessen Besonderheit darin liegt, dass zur Bestimmung oder Bemessung des Füllpulses oder Solldrucks und/oder als Führungsgröße für die Regelung des Radbremsdruckes während eines .Antriebsschlupfregelungsvorgangs ein Solldruck auf Basis eines PD-Reglers nach der Beziehung

$$EP_{Soll1} = EP_{Base} + k_{P1} * \lambda_F + k_{D1} * \dot{\lambda}_F$$

ermittelt wird; in dieser Gleichung sind mit

$EP_{soll}$ - der angeforderte Solldruck
$EP_{Base}$- ein fester Basisanteil
$\lambda_F$- der gefilterter Radschlupf
$\dot{\lambda}_F$ - die gefilterte Radschlupfbeschleunigung
$k_{P1}$ - ein proportionaler Verstärkungsfaktor und mit
$k_{D1}$ - ein differentieller Verstärkungsfaktor

bezeichnet.

Das erfindungsgemäße Verfahren beruht auf der Überlegung, dass sich durch den vorgenannten PD-Ansatz der Füllpuls und die Führungsgröße kontinuierlich und adaptiv bestimmen lässt, mit dem Ergebnis, dass bereits beim Eintritt in die Antriebsschlupfregelung ein genauer Druckarbeitspunkt zur Verfügung steht.

Nach einem vorteilhaften Ausführungsbeispiel der Erfindung, das für eine Bremsanlage mit einer Druckmittelpumpe vorgesehen ist, die bei Bremsdruckbedarf eingeschaltet wird, - also für Bremsanlagen ohne Hochdruckspeicher - wird der Solldruck zur Einstellung der Druckreglerdynamik ausgewertet. Dabei wird die Dynamik der Druckversorgung in Abhängigkeit von der Differenz zwischen dem Solldruck und dem gemessenen oder näherungsweise ermittelten Istdruck in der Radbremse oder Modelldruck variiert und an die jeweilige Situation angepaßt.

Schließlich wird nach einer weiteren Ausführungsart der Erfindung die Differenz der Regelabweichung, nämlich die Differenz zwischen dem Solldruck und dem Modelldruck, gebildet und bewertet, wobei der Füllpuls beendet wird, wenn der Modeldruck eine vorgegebene Druckschwelle überschreitet, die nach der Beziehung

$$MP_{Soll} = MP_{Base} + k_{P2} * \lambda_F + k_{D2} * \dot{\lambda}_F$$

gebildet wird, wobei

$MP_{soll}$ - Abbruchschwelle
$MP_{Base}$ - fester Basisanteil
$\lambda_F$ - gefilterter Radschlupf
$\dot{\lambda}_F$ - gefilterte Radschlupfbeschleunigung
$k_{P2}$ - proportionaler Verstärkungsfaktor
$k_{D2}$ - differentieller Verstärkungsfaktor

bedeuten.

Weitere Einzelheiten, Vorteile und Anwendungsmöglichkeiten der Erfindung gehen aus der folgenden Beschreibung von Ausführungsbeispielen anhand der beigefügten Abbildungen hervor. Es zeigen

Figur 1    in schematischer Teildarstellung Komponenten oder Funktionsblöcke eines Regelungssystems zur Durchführung des erfindungsgemäßen Verfahrens,

Figur 2    ein Diagramm zur Erläuterung der Abläufe beim Einsatz der Erfindung für eine Bremsanlage ohne Hochdruckspeicher und

Figur 3    in gleicher Darstellungsweise wie Figur 2 ein Diagramm zur Erläuterung der Abläufe bei einer Bremsanlage mit Hochdruckspeicher.

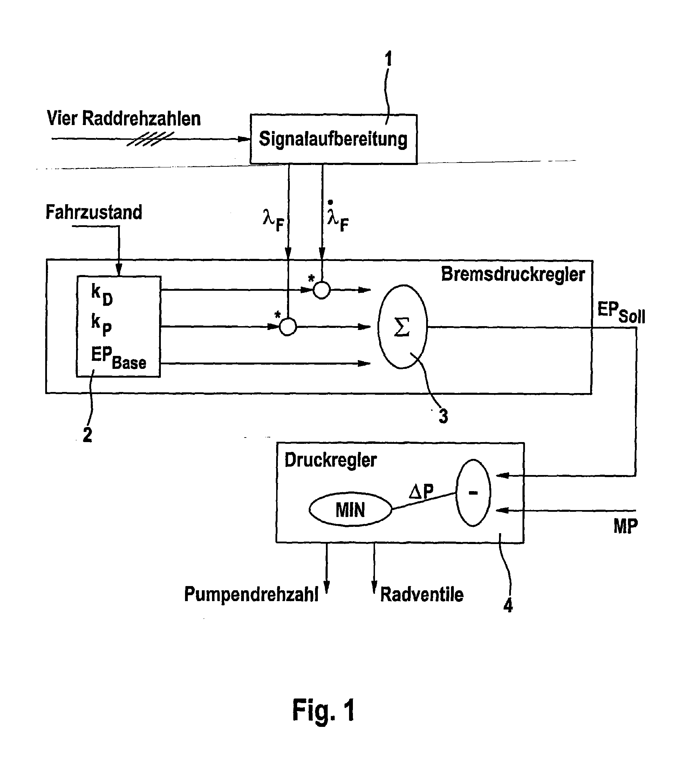

Die in Figur 1 nur teilweise und nur symbolisch dargestellte Schaltung dient zum Betrieb eines Antriebsschlupfregelungssystems, bei dem der Bremsdruck im Bedarfsfall mit Hilfe eines hydraulischen Motor-Pumpenaggregates erzeugt und über Bremsdruckregelventile zu den Radbremsen weitergeleitet wird. Durch Beobachten der Ventilschaltzeiten, der Pumpenlaufzeiten etc. lässt sich bekanntlich ein Modelldruck errechnen, der näherungsweise den tatsächlichen Druck in der jeweiligen Radbremse wiedergibt.

Nach Figur 1 werden Signale ("vier Radsignale"), die in bekannter Weise mit Hilfe von Radsensoren gewonnen werden und das Drehverhalten der einzelnen Fahrzeugräder wiedergeben, in einer Signalaufbereitung 1 ausgewertet. Es werden unter anderem Informationen über den gefilterten Radschlupf $\lambda_F$ und über die gefilterte Radschlupfbeschleunigung $\dot{\lambda}_F$ aus dem Raddrehverhalten abgeleitet. Diese Größen werden mit in einem Schaltblock 2 gebildeten und/oder gespeicherten Verstärkungsfaktoren $k_{P1}$ und $k_{D1}$ multipliziert und in einem Addierer 3 nach der Beziehung

$$EP_{Soll1} = EP_{Base} + k_{P1} * \lambda_F + k_{D1} * \dot{\lambda}_F$$

unter Berücksichtigung eines Basisanteils $EP_{Base}$ ausgewertet. Auf diesen Weg wird ein Solldruck $E_{PSoll1}$ ermittelt, der nach Vergleich mit einem gemessenen oder, wie hier, durch Modellbildung ermittelten Raddruck-Näherungswert bzw. Modelldruck MP - es wird die Differenz gebildet - in einem Druckregler 4 weiterverarbeitet wird. Der Druckregler 4 generiert Ansteuerungssignale für die Druckmittelpumpe ("Pumpendrehzahl") des Systems und für die Bremsdruckregelventile ("Ventile"). Die Dynamik des Antriebsschlupfregelungssystems wird durch die Ansteuerung der Pumpe (Dauersignal oder Pulse) beeinflußt.

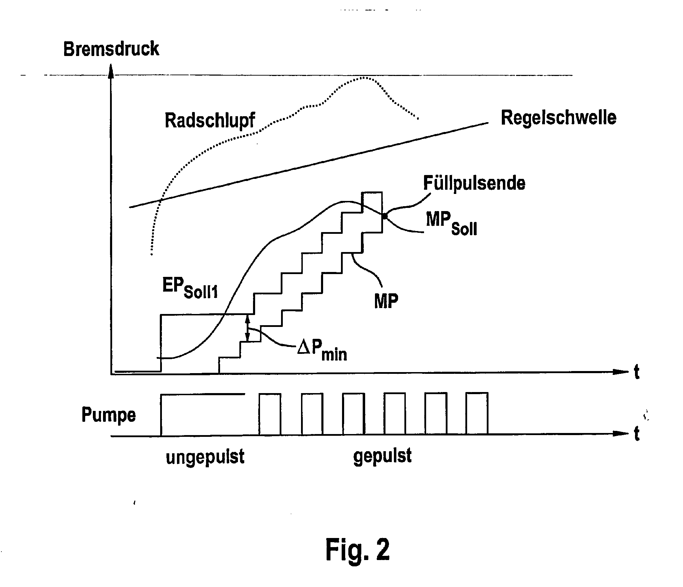

Bei hydraulischen Bremsanlagen mit nicht zu vernachlässigenden Verzugszeiten (das sind Anlagen, bei denen der zur Antriebsschlupfbegrenzung benötigte Druck, sobald Bedarf besteht, durch Ansteuerung einer Pumpe erzeugt wird) dient die Druckvorgabe zur Einstellung der Druckreglerdynamik. Die Abläufe bei einer solchen Bremsanlage, die ohne einen Hochdruckspeicher auskommen muß, sind in Figur 2 veranschaulicht. Der Druckregler stellt durch die Differenz der Regelabweichung AP = Solldruck (EP) - Modelldruck (MP) die Dynamik der Förderpumpe und somit den Komfort ein. Bei kleinen Regelabweichungen, wird die Pumpe nicht mehr vollangesteuert und geht in einen getakteten Betrieb über. Hat der Modelldruck eine bremsanlagenspezifische Hysterese $\Delta P_{min}$ oder Mindestdifferenzwert zum Solldruck erreicht, wird die Druckvorgabe mit dieser Hysterese beaufschlagt um einen Übergang vom ungepulsten in den gepulsten Druckaufbau zu erhalten: es gilt

$$EP_{Soll} = MP + \Delta P_{min}$$

falls

$$EP_{Soll} - MP < \Delta P_{min}$$

Der Hysterese $\Delta P_{min}$ entspricht das auf den Druck umgerechnete minimale Volumen, welches vom Druckregler innerhalb einer Reglerzykluszeit (Loop) eingestellt werden kann. Die Hysterese ist maßgeblich von der Volumenaufnahme des Bremssattels, d.h. von der Druck/Volumen-Kennlinie, abhängig.

Der Füllpuls wird beendet, falls der Modelldruck (MP) eine vorgegebene Druckschwelle $MP_{Soll}$ überschreitet. Dies veranschaulicht Figur 2. Die Druckabbruchschwelle wird definiert als

$$MP_{Soll} = MP_{Base} + k_P * \lambda_F + k_D * \dot{\lambda}_F$$

$MP_{Soll}$- Abbruchschwelle
$MP_{Base}$- fester Basisanteil
$\lambda_F$- gefilterter Radschlupf
$\dot{\lambda}_F$ - gefilterte Radschlupfbeschleunigung
$k_P$ - proportionaler Verstärkungsfaktor
$k_D$ - differentieller Verstärkungsfaktor

In der Figur 2 sind der Radschlupf, Schlupf-Regelschwelle, der Solldruck $EP_{Solll}$, der Modelldruck MP (d.h. der durch Modellbildung ermittelter Radbremsdruck), die Abbruchschwelle $MP_{Soll}$ und die Pumpenansteuerungssignale während eines Antriebsschlupfregelungsvorgangs wiedergegeben. Sobald der Radschlupf die Regelschwelle überschreitet, wird die Druckmittelpumpe eingeschaltet. Um ein hohe Dynamik zu erreichen, wird die Pumpe anfangs ungepulst, anschließend gepulst angesteuert. Der Übergang zum gepulsten Ansteuern erfolgt, sobald die Hystereseschwelle $\Delta P_{min}$ erreicht oder unterschritten wird.

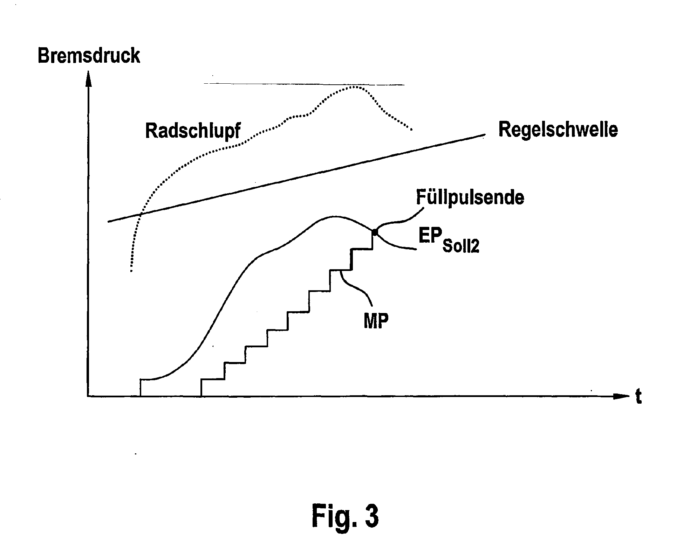

Bei elektro-hydraulischen oder elektro-mechanischen Bremsanlagen sind bekanntlich die Verzugszeiten (Verzögerungszeiten) bei der Einstellung der Solldrücke klein, weil der Druck aus einem Hochdruckspeicher bzw. mittels elektrischer Energie zur Verfügung gestellt wird. Figur 3 bezieht sich auf eine Bremsanlage mit einen Hochdruckspeicher, z.B. auf ein elektrohydraulisches Bremsensystem (EHB). Bei solchen Anlagen kann die Vorgabe bzw. der Solldruck direkt als Führungsgröße für die Bremsenregelung verwendet werden. Dabei werden die Reglerparameter $EP_{Base}$, $k_P$ und $k_D$ zweckmäßigerweise reibwertabhängig f($\mu$) bzw. situationsabhängig als Funktion des Fahrzustandes (Kurve, $\mu$-Split etc.) empirisch abgestimmt.

Da die meisten Fahrzeuge mit Bremsanlagen ausgerüstet sind, bei denen die Druckmittel-Volumenaufnahme und die Bremsenkennwerte an der Vorderachse und an der Hinterachse verschieden sind, werden sich bei gleichem Druck unterschiedliche Bremsmomente an der Vorder- bzw. Hinterachse einstellen. Daher werden nach einem vorteilhaften Ausführungsbeispiel der Erfindung sowohl der Solldruck als auch die Druckabbruchschwelle der Hinterachse mit einem Faktor $k_{rear}$ gewichtet.

Um bei höheren Geschwindigkeiten ein weniger sensibles Regelverhalten zu erhalten, wird die Abbruchschwelle über die Geschwindigkeit mit einem Faktor $k_{vref}$ gewichtet, der wie folgt definiert ist:

$$k_{v_{ref}} = \frac{v_{limit} - v_{ref}}{v_{limit} - v_{thr}} \qquad \text{falls} \qquad v_{ref} > v_{thr}$$

In dieser Beziehung sind mit $v_{limit}$ und $v_{thr}$ Geschwindigkeitsgrenzwerte verschiedener Höhe, mit $v_{ref}$ wird üblicherweise die Fahrzeug(referenz)geschwindigkeit bezeichnet.

**Patentansprüche**

1.  Verfahren zur Verbesserung des Regelverhaltens eines Systems zur Antriebsschlupfregelung durch Bremseneingriff (BASR), bei dem bei Eintritt in einen Antriebsschlupfregelungsvorgang ein als Füllpuls bezeichneter Druckwert oder Solldruck vorgegeben wird, **dadurch gekennzeichnet, dass** zur Bestimmung des Füllpulses und/oder als Führungsgröße für die Regelung des Radbremsdruckes während eines Antriebsschlupfregelungsvorgangs der Solldruck $(EP_{Soll})$ auf Basis eines PD-Reglers nach der Beziehung

$$EP_{Soll1} = EP_{Base} + k_{P1} * \lambda_F + k_{D1} * \dot{\lambda}_F$$

    ermittelt wird, wobei

    $EP_{Soll}$ - angeforderter Solldruck
    $EP_{Base}$ - fester Basisanteil
    $\lambda_F$ - gefilterter Radschlupf
    $\dot{\lambda}_F$ gefilterte Radschlupfbeschleunigung
    $k_{P1}$ - proportionaler Verstärkungsfaktor
    $k_{D1}$ - differentieller Verstärkungsfaktor

    bedeuten.

2.  Verfahren nach Anspruch 1, für ein Bremsensystem, bei der bei Bremsdruckbedarf während eines Antriebsschlupfregelungsvorgangs eine Druckmittelpumpe angesteuert wird, **dadurch gekennzeichnet, dass** der Solldruck $(EP_{Soll})$ zur Einstellung der Druckreglerdynamik ausgewertet wird.

3.  Verfahren nach Anspruch 2, **dadurch gekennzeichnet, dass** die Dynamik der Druckversorgung bzw. der Druckmittelpumpen-Ansteuerung in Abhängigkeit von der Differenz zwischen dem Solldruck $(EP_{Soll})$ und dem gemessenen oder näherungsweise ermittelten Istdruck in der Radbremse oder Modelldruck (MP) variiert und an die jeweilige Situation angepasst wird.

4.  Verfahren nach Anspruch 2 oder 3, **dadurch gekennzeichnet, dass** die Differenz ($\Delta$P) der Regelabweichung, nämlich die Differenz zwischen dem Solldruck $(EP_{Soll})$ und dem Modelldruck (MP), gebildet und bewertet wird und dass der Füllpuls beendet wird, wenn der Modelldruck (MP) eine vorgegebene Druckschwelle $(MP_{soll})$ überschreitet, die nach der Beziehung

$$MP_{Soll} = MP_{Base} + k_{P2} * \lambda_F + k_{D2} * \dot{\lambda}_F$$

    gebildet wird, wobei

    $MP_{Soll}$ - Abbruchschwelle
    $MP_{Base}$ - fester Basisanteil
    $\lambda_F$ - gefilterter Radschlupf
    $\dot{\lambda}_F$ - gefilterte Radschlupfbeschleunigung
    $k_{P2}$ - proportionaler Verstärkungsfaktor
    $k_{D2}$ - differentieller Verstärkungsfaktor

    bedeuten.

**5.** Verfahren nach Anspruch 1, fr ein Bremsensystem mit einem Hochdruckspeicher; aus dem während eines Antriebsschlupfregelungsvorgangs Druckmittel in das Bremsensystem eingesteuert wird, **dadurch gekennzeichnet, dass** der Füllpuls oder der Solldruck ($EP_{Soll}$) als Führungsgröße für die Regelung des Raddruckverlaufs während des gesamten Antriebsschlupfregelungsvorgangs oder während der An fangsphase, nämlich bis zu einer ereignisabhängigen oder zeitabhängigen Vorgabe, dient.

**6.** Verfahren nach Anspruch 5, **dadurch gekennzeichnet, dass** als ereignisabhängige Vorgabe das Erreichen oder Überschreiten einer Druckschwelle definiert wird, bei der Führungsgröße oder Solldruck ($EP_{Soll2}$) und Modelldruck (MP) übereinstimmen.

**Claims**

**1.** Method for improving the control behaviour of a system for acceleration spin control by brake engagement (BASR), in which, upon the onset of an acceleration slip control operation, a pressure value or desired pressure, designated as a filling pulse, is stipulated, **characterized in that**, to determine the filling pulse and/or as a command variable for regulating the wheel brake pressure during an acceleration spin control operation, the desired pressure ($EP_{des}$) is determined on the basis of a PD controller according to the relation

$$EP_{des1} = EP_{base} + k_{P1} * \lambda_F + k_{D1} * \dot{\lambda}_F$$

in which

$EP_{des}$ means the required desired pressure
$EP_{base}$ a fixed basic fraction
$\lambda_F$ filtered wheel spin
$\lambda_P$ filtered wheel spin acceleration
$k_{P1}$ proportional amplification factor
$k_{D1}$ differential amplification factor.

**2.** Method according to Claim 1, for a brake system in which a pressure-medium pump is activated in the event of a brake-pressure demand during an acceleration spin control operation, **characterized in that** the desired pressure ($EP_{des}$) is evaluated in order to set the pressure controller dynamics.

**3.** Method according to Claim 2, **characterized in that** the dynamics of the pressure supply or of the pressure-medium pump activation varies as a function of the difference between the desired pressure ($EP_{des}$) and the measured or approximately determined actual pressure in the wheel brake or the model pressure (MP) and is adapted to the respective situation.

**4.** Method according to Claim 2 or 3, **characterized in that** the difference ($\Delta P$) in the control deviation, to be precise the difference between the desired pressure ($EP_{des}$) and the model pressure (MP), is formed and assessed, and **in that** the filling pulse is terminated when the model pressure (MP) overshoots a stipulated pressure threshold ($MP_{des}$) which is formed according to the relation

$$MP_{des} = MP_{base} + k_{P2} * \lambda_F + k_{D2} * \dot{\lambda}_F$$

in which

$MP_{des}$ means the termination threshold
$MP_{base}$ a fixed basic fraction
$\lambda_F$ filtered wheel spin
$\dot{\lambda}_F$ filtered wheel spin acceleration

$k_{P2}$ proportional amplification factor

$k_{D2}$ differential amplification factor.

5. Method according to Claim 1, for a brake system with a high-pressure accumulator, out of which pressure medium is fed into the brake system during an acceleration slip control operation, **characterized in that** the filling pulse or the desired pressure ($EP_{des}$) serves as a command variable for regulating the wheel pressure profile during the entire acceleration spin control operation or during the initial phase, to be precise up to an event-dependent or time-dependent stipulation.

6. Method according to Claim 5, **characterized in that** an event-dependent stipulation is defined as being the reaching or overshooting of a pressure threshold at which the command variable or desired pressure ($EP_{des2}$) and the model pressure (MP) coincide.

**Revendications**

1. Procédé pour améliorer les caractéristiques de régulation d'un système pour la régulation du glissement d'entraînement par engagement des freins (BASR), dans lequel, lors de l'amorce d'une opération de régulation du glissement d'entraînement, une valeur de pression ou une pression de consigne, désignée impulsion de remplissage, est prédéfinie, **caractérisé en ce que** pour déterminer l'impulsion de remplissage et/ou en tant que valeur guide pour la régulation de la pression des freins de roue pendant une opération de régulation du glissement d'entraînement, la pression de consigne ($EP_{Soll}$) est détectée sur la base d'un régulateur PD conformément à la relation

$$EP_{Soll1} = EP_{Base} + k_{P1} * \lambda_F + k_{D1} * \dot{\lambda}_F$$

avec

$EP_{Soll}$ = Pression de consigne demandée

$EP_{Base}$ = Proportion de base fixe

$\lambda_F$ = Glissement des roues filtré

$\dot{\lambda}_F$ = Accélération du glissement des roues filtré

$k_{P1}$ - *Facteur* d'amplification proportionnel

$k_{D1}$ = Facteur d'amplification différentiel.

2. Procédé selon la revendication 1, pour un système de freinage, dans lequel, en cas de besoin de pression de freinage pendant une opération de régulation du glissement d'entraînement, une pompe pour fluide sous pression est commandée, **caractérisé en ce que** la pression de consigne ($EP_{Soll}$) est analysée pour ajuster la dynamique du régulateur de pression.

3. Procédé selon la revendication 2, **caractérisé en ce que** la dynamique d'alimentation en pression ou de la commande de la pompe de fluide sous pression est modifiée en fonction de la différence entre la pression de consigne ($EP_{Soll}$) et la pression réelle mesurée ou déterminée approximativement dans le frein de roue ou la pression modélisée (MP) et est adaptée à la situation respective.

4. Procédé selon la revendication 2 ou 3, **caractérisé en ce que** la différence (ΔP) de l'écart de régulation, à savoir la différence entre la pression de consigne ($EP_{Soll}$) et la pression modélisée (MP) est effectuée et analysée et **en ce que** l'impulsion de remplissage est terminée lorsque la pression modélisée (MP) dépasse un seuil de pression prédéfinie ($MP_{Soll}$), qui est obtenu par la relation

$$MP_{Soll} = MP_{Base} + k_{P2} * \lambda_F + k_{D2} * \dot{\lambda}_F$$

avec

$MP_{Soll}$ = Seuil d'arrêt
$MP_{Base}$ = Proportion de base fixe
$\lambda_F$ = Glissement des roues filtré
$\dot{\lambda}_F$ = Accélération du glissement des roues filtré
$k_{P2}$ = Facteur d'amplification proportionnel
$k_{D2}$ = Facteur d'amplification différentiel.

**5.** Procédé selon la revendication 1, pour un système de freinage ayant un accumulateur haute pression ; duquel, pendant une opération de régulation du glissement d'entraînement, du fluide sous pression est injecté dans le système de freinage, **caractérisé en ce que** l'impulsion de remplissage ou la pression de consigne ($EP_{Soll}$) sert de valeur guide pour la régulation de l'allure de la pression des roues pendant toute l'opération de régulation du glissement d'entraînement ou pendant la phase de démarrage, à savoir jusqu'à une valeur prédéterminée dépendant des évènemens ou du temps.

**6.** Procédé selon la revendication 5, **caractérisé en ce que** on définit comme valeur prédéfinie dépendant des évènements l'obtention ou le dépassement d'un seuil de pression, auquel la valeur guide ou la pression de consigne ($EP_{Soll2}$) et la pression modélisée (MP) coïncident.

**Fig. 1**

**Bremsdruck**

Radschlupf

Regelschwelle

Füllpulsende

$MP_{Soll}$

$EP_{Soll1}$

MP

$\Delta P_{min}$

t

Pumpe

t

ungepulst          gepulst

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5445442 A
- EP 1118517 A